# EUROPEAN PATENT APPLICATION

(11) **EP 1 422 812 A1**
(43) Date of publication of application: **26.05.2004**
(21) Application number: 01961284.5
(22) Date of filing: 31.08.2001
(51) Int. Cl.: H02K 33/02

(54) **SOLENOID VALVE DRIVER**

(71) Applicant: MITSUBISHI DENKI KABUSHIKI KAISHA, Tokyo 100-8310 (JP)
(72) Inventor: YOSHIZAWA, Toshiyuki, c/o MITSUBISHI DENKI K. K., Tokyo 100-8310 (JP); TAKEUCHI, Toshie, c/o MITSUBISHI DENKI K. K., Tokyo 100-8310 (JP); IMAGI, Akihiko, c/o MITSUBISHI DENKI K. K., Tokyo 100-8310 (JP); SEO, Kazutaka, c/o MITSUBISHI DENKI KABUSHIKI K., Tokyo 100-8310 (JP); SUGAWARA, Masafumi, c/o MITSUBISHI DENKI K. K., Tokyo 100-8310 (JP); MATSUDA, Tetsuya, c/o MITSUBISHI DENKI K. K., Tokyo 100-8310 (JP); FUKUSHIMA, Kazuhiko, c/o MITSUBISHI DENKI K. K., Tokyo 100-8310 (JP)
(74) Representative: Sajda, Wolf E., Dipl.-Phys.
(86) International application number: PCT/JP2001/007570
(87) International publication number: WO 2003/021754

(57) **Abstract**

An outer core placed opposite to a movable core is inclined inward. Therefore, a small sized movable core can be produced, a movable element including the movable core can be lightened in weight, and a driving operation of a valve can be smoothly and stably performed.

## Description

### TECHNICAL FIELD

The present invention relates to an electromagnetic valve driving device in which a suction valve and/or an exhaust valve used in an internal combustion engine is, for example, directly driven so as to be opened or closed.

### BACKGROUND ART

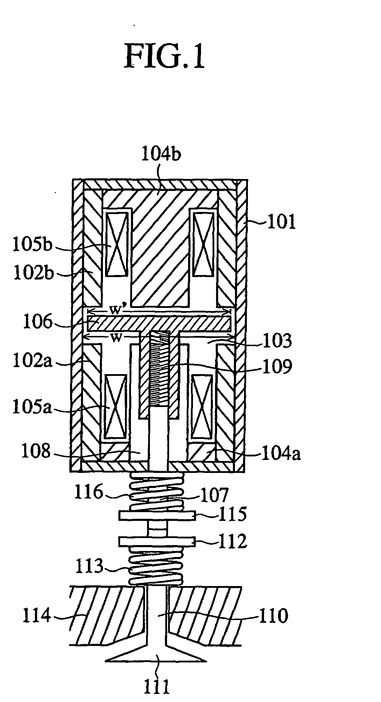

Fig. 1 is a longitudinal sectional view showing a conventional electromagnetic valve driving device. In Fig. 1, 101 indicates a case. 102a and 102b respectively indicate a first outer core and a second outer core fitted to an inner wall surface of the case 101. The first and second outer cores 102a and 102b opposite to each other are spaced from each other at a prescribed interval of an interval area 103. 104a and 104b respectively indicate a first central core and a second central core. The first central core 104a has both a base portion covering an end face of the first outer core 102a and a central portion placed in a hollow area of the first outer core 102a. The second central core 104b has both a base portion covering an end face of the second outer core 102b and a central portion placed in a hollow area of the second outer core 102b. A core formed in an E shape in longitudinal section is made of both the first outer core 102a and the first central core 104a, and another core formed in an E shape in longitudinal section is made of both the second outer core 102b and the second central core 104b.

105a and 105b respectively indicate a first coil and a second coil. The first coil 105a is fitted to the first central core 104a, and the second coil 105b is fitted to the second central core 104b. 106 indicates a movable core placed in an area in which the first and second outer cores 102a and 102b placed opposite to each other are spaced in the interval area 103. 107 indicates a movable core connecting shaft which passes through a through hole 108 placed in the center of the first central core 104a. The movable core 106 is fitted to a top end portion of the movable core connecting shaft 107 by using a screw 109 or welding. 110 indicates a valve shaft of which a top end abuts with a lower end of the movable core connecting shaft 107. A valve 111 is fitted to a lower end of the valve shaft 110. 112 indicates a spring receiving plate fixed to the valve shaft 110. 113 indicates a first coil spring fitted to the valve shaft 110 between a device body 114 and the spring receiving plate 112. 115 indicates a spring receiving plate fixed to a lower portion of the movable core connecting shaft 107. 116 indicates a second coil spring fitted to the movable core connecting shaft 107 between a lower face of the first central core 104a and the spring receiving plate 115.

Next, an operation will be described below.

In a case where no current is supplied to the first coil 105a or the second coil 105b, the movable core 106 is placed at a prescribed position of the interval area 103 so as to balance resilient forces of the first coil spring 113 and the second coil spring 116 with each other.

In this positional condition, when a current is supplied to the first coil 105a to open the valve 111, an electromagnetic force is induced due to a magnetic field based on magnetic fluxes passing through a magnetic path of the movable core 106, the first outer core 102a and the first central core 104a, the movable core 106 is moved toward the first outer core 102a due to both the induced electromagnetic force and the resilient force of the second coil spring 116. Therefore, the movable core connecting shaft 107 and the valve shaft 110 are moved downward against the resilient force of the first coil spring 113, and the valve 111 is opened. Here, an open degree of the valve 111 is determined according to an intensity of the current supplied to the first coil 105a.

Thereafter, to close the valve 111, the supply of the current to the first coil 105a is cut off, and a current is supplied to the second coil 105b. In this case, an electromagnetic force is induced due to a magnetic field based on magnetic fluxes passing through a magnetic path of the movable core 106, the second outer core 102b and the second central core 104b, the movable core 106 is moved toward the second outer core 102b due to both the induced electromagnetic force and the resilient force of the first coil spring 113. Therefore, the movable core connecting shaft 107 and the valve shaft 110 are moved upward against the resilient force of the second coil spring 116, and the valve 111 is closed.

Because the core of the conventional electromagnetic valve driving device is formed in the E shape in longitudinal section by the outer core and the central core, the movable core 106 forming a portion of the magnetic path in the core requires a width W' substantially equal to a width W in the vertical direction of the E shape. Therefore, t the movable core 106 of the conventional electromagnetic valve driving device becomes heavy, and a problem has arisen that an open-close movement of the valve 111 cannot be smoothly obtained.

The present invention is provided to solve the above-described problem, and the object of the present invention is to provide an electromagnetic valve driving device in which a movable element including a movable core is lightened in weight due to a simple structure made at a low cost without adversely influencing on an induced electromagnetic force so as to smoothly perform an open-close movement of a valve.

### DISCLOSURE OF THE INVENTION

In an electromagnetic valve driving device according to the present invention, a top portion of a fixed core placed opposite to a movable core is inclined inward so as to set the top portion to a smaller diameter, and the movable core is set to the same size as that of an end face of the top portion of the fixed core set to the smaller diameter.

Therefore, a movable core having a narrow width can be used, a movable element including the movable core can be sized down and lightened in weight, and an open-close movement of a valve can be smoothly performed.

In an electromagnetic valve driving device according to the present invention, the fixed core includes an outer core, and a central core placed in a hollow area of the outer core. The top portion of the outer core placed opposite to the movable core is inclined inward, and a top portion of the central core is tapered in compliance with the inclination of the top portion of the outer core.

Therefore, a width of an end face of a core, which is composed of the outer core and the central core and is formed in an E shape in longitudinal section, can be narrowed. As a result, a movable core having a narrow width can be used so as to be placed opposite to the end face of the core. Therefore, a movable element including the movable core can be sized down and lightened in weight, and an open-close movement of a valve can be smoothly performed.

In an electromagnetic valve driving device according to the present invention, both an inward inclined portion of the outer core placed opposite to the movable core and a top tapered portion of the central core are formed so as to be protruded from an end face of a coil.

Therefore, an electromagnetic force induced is not reduced, a movable element including the movable core can be sized down and lightened in weight, and an open-close movement of a valve can be smoothly performed.

In an electromagnetic valve driving device according to the present invention, a diameter of the central core is constant along a longitudinal direction of the central core, and a coil is placed in an area opposite to an inward inclined portion of the outer core.

Therefore, an electromagnetic force induced can be increased, a movable element including the movable core can be sized down and lightened in weight, and an open-close movement of a valve can be smoothly performed.

In an electromagnetic valve driving device according to the present invention, another coil different from the coil placed in an area opposite to a straight line portion of the outer core is placed in an area opposite to an inward inclined portion of the outer core.

Therefore, the other coil can be easily arranged, an electromagnetic force induced can be increased, a movable element including the movable core can be sized down and lightened in weight, and an open-close movement of a valve can be smoothly performed.

In an electromagnetic valve driving device according to the present invention, a bearing of the movable core connecting shaft is placed in the central core in coaxial with a movable core connecting shaft penetrated hole of the central core.

Therefore, because the movable core connecting shaft is held by the bear in the neighborhood of the movable core, a fluctuated movement of the movable core connecting shaft can be efficiently prevented, the movable core connecting shaft can be shortened, the weight-lightening of a movable element including the movable core can be further improved, and the stabilized driving of a valve can be further improved.

In an electromagnetic valve driving device according to the present invention, a bearing of the movable core connecting shaft is placed in the central core in coaxial with a movable core connecting shaft penetrated hole of the central core, a pair of cut off portions are formed in both side end portions of the movable core which correspond to both right and left lines passing through the movable core connecting shaft penetrated hole and through which no magnetic flux passes by the movable core connecting shaft penetrated hole.

Therefore, an electromagnetic force induced is not reduced, the movable core can be lightened in weight, the weight-lightening of a movable element including the movable core can be further improved, and the stabilized driving of a valve can be further improved.

In an electromagnetic valve driving device according to the present invention, a second central core of the central core is formed without any hole.

Therefore, a holding force in a valve close operation can be improved.

In an electromagnetic valve driving device according to the present invention, a second coil spring is placed in a second central core of the central core, and one end of the second coil spring is held by the movable core.

Therefore, no spring receiving plate fitted to the movable core connecting shaft is required, the movable core connecting shaft can be lightened in weight, the weight-lightening of a movable element including the movable core can be further improved, and the stabilized driving of a valve can be further improved.

In an electromagnetic valve driving device according to the present invention, an interval managing jig arranged between a first outer core of the outer core and a second outer core of the outer core is placed in an area which corresponds to both right and left lines passing through a movable core connecting shaft penetrated hole of a first central core of the central core and through which no magnetic flux passes by the movable core connecting shaft penetrated hole, and a relief concavity is placed in a portion of the movable core corresponding to the interval managing jig.

Therefore, the interval management can be precisely performed by using a simple structure without adversely influencing on an electromagnetic force induced.

In an electromagnetic valve driving device according to the present invention, the interval managing jig and the central core are integrally formed of non-laminated non-magnetic material and are processed.

Therefore, the interval management can be performed with high precision.

In an electromagnetic valve driving device according to the present invention, a first coil spring has both a larger diameter on a side of a device body and a smaller diameter on a side of a spring receiving plate placed on the valve shaft so as to be formed in a conical shape, and a second coil spring has both a larger diameter on a side of the magnetic path forming core and a smaller diameter on a side of a spring receiving plate placed on the movable core connecting shaft so as to be formed in a conical shape.

Therefore, the diameter of the spring receiving plates placed on the valve shaft and the movable core connecting shaft respectively can be reduced, and the weight-lightening of a movable element including the movable core and the stabilized driving of a valve can be improved by the lightening of both the valve shaft and the movable core connecting shaft in weight. Also, a resilient force of each coil spring can be given to the valve shaft or the movable core connecting shaft.

### BRIEF DESCRIPTION OF THE DRAWINGS

Fig. 1 is a longitudinal sectional view showing a conventional electromagnetic valve driving device.
Fig. 2 is a longitudinal sectional view showing an electromagnetic valve driving device according to a first embodiment of the present invention.
Fig. 3 is a longitudinal sectional view showing an important part of the electromagnetic valve driving device.
Fig. 4 is a longitudinal sectional view showing an important part of an electromagnetic valve driving device according to a second embodiment of the present invention.
Fig. 5 is a longitudinal sectional view showing a modified example of the important part of the electromagnetic valve driving device.
Fig. 6 is a longitudinal sectional view showing an important part of an electromagnetic valve driving device according to a third embodiment of the present invention.
Fig. 7 is a longitudinal sectional view showing a modified example of the important part of the electromagnetic valve driving device.
Fig. 8 is a longitudinal sectional view showing an important part of an electromagnetic valve driving device according to a fourth embodiment of the present invention.
Fig. 9 is a transverse sectional view taken substantially along line 9-9 of Fig. 8.
Fig. 10 is a plan view showing an important part of an electromagnetic valve driving device according to a fifth embodiment of the present invention.
Fig. 11 is a longitudinal sectional view showing an electromagnetic valve driving device according to a sixth embodiment of the present invention.
Fig. 12 is a longitudinal sectional view showing an electromagnetic valve driving device according to a seventh embodiment of the present invention.
Fig. 13 is a lateral sectional view taken substantially along line 13-13 of Fig. 12.
Fig. 14 is an exploded oblique view of a part of the electromagnetic valve driving device shown in Fig. 13.
Fig. 15 is a longitudinal sectional view showing an important part of an electromagnetic valve driving device according to an eighth embodiment of the present invention.
Fig. 16 is a longitudinal sectional view showing a modified example of an important part of the electromagnetic valve driving device.

### BEST MODE FOR CARRYING OUT THE INVENTION

Hereinafter, the best mode for carrying out the present invention will now be described with reference to the accompanying drawings to explain the present invention in more detail.

### EMBODIMENT 1

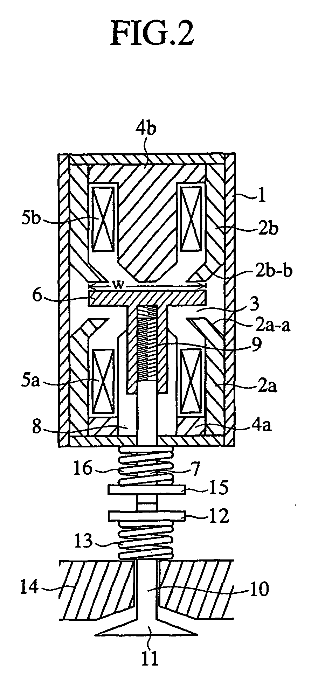

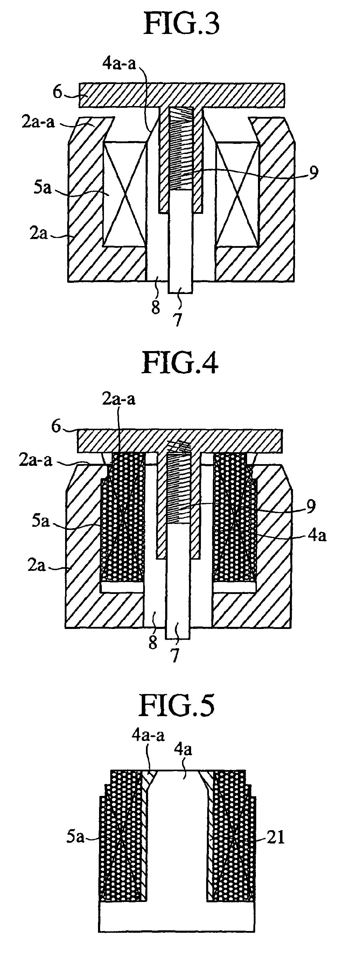

Fig. 2 is a longitudinal sectional view showing an electromagnetic valve driving device according to a first embodiment of the present invention, and Fig. 3 is an enlarged view showing an important part of the electromagnetic valve driving device. In Fig. 2 and Fig. 3, 1 indicates a case. 2a and 2b respectively indicate a first outer core and a second outer core fitted to a middle portion of an inner wall of the case 1 so as to be spaced from each other at a prescribed interval of an interval area 3. The first and second outer cores 2a and 2b form a portion of a fixed core. 4a and 4b respectively indicate a first central core and a second central core. The first central core 4a has both a base portion covering an end face of the first outer core 2a and a pillar portion inserted in a hollow area of the first outer core 2a, and the second central core 4b has both a base portion covering an end face of the second outer core 2b and a pillar portion inserted in a hollow area of the second outer core 2b. 5a and 5b respectively indicate a first coil and a second coil. The first coil 5a is fitted to the pillar portion of the first central core 4a, and the second coil 5b is fitted to the pillar portion of the second central core 4b. 6 indicates a movable coil which is placed in the interval area 3 of the first and second outer coils 2a and 2b placed opposite to each other. 7 indicates a movable core connecting shaft which passes through a through hole 8 placed in the center of the first central core 4a. The movable coil 6 is fitted to a top portion of the movable core connecting shaft 7 by a screw 9 or welding.

10 indicates a valve shaft of which a top end abuts with a lower end of the movable core connecting shaft 7. A valve 11 is fitted to a lower end of the valve shaft 10. 12 indicates a spring receiving plate fixed to the valve shaft 10. 13 indicates a first coil spring fitted to the valve shaft 10 between a device body 14 and the spring receiving plate 12. 15 indicates a spring receiving plate fixed to a lower portion of the movable core connecting shaft 7. 16 indicates a second coil spring fitted to the movable core connecting shaft 7 between a lower face of the first central core 4a and the spring receiving plate 15.

In the present invention, a top portion 2a-a of the first outer core 2a forming a portion of the fixed core is opposite to the movable core 6 and is inclined inward so as to shorten a diameter of the top portion 2a-a, a top portion 4a-a of the first central core 4a forming another portion of the fixed core is tapered off in compliance with the inclination of the portion 2a-a of the first outer core 2a, and the movable core 6 is set to have a width almost equal to a width W of a shortened diameter of an end face of the portion 2a-a of the first outer core 2a. As shown in Fig. 3, both the inward inclined portion 2a-a of the first outer core 2a placed opposite to the movable coil 6 and the top tapered portion 4a-a of the first central core 4a are formed so as to be protruded from the end face of the first coil 5a. Next, an operation will be described below.

In a case where no current is supplied to the first coil 5a or the second coil 5b, the movable core 6 is placed at a prescribed position of the interval area 3 so as to balance resilient forces of the first coil spring 13 and the second coil spring 16 with each other.

In this positional condition, when a current is supplied to the first coil 5a to open the valve 11, an electromagnetic force is induced due to a magnetic field based on magnetic fluxes passing through a magnetic path of the movable core 6, the first outer core 2a and the first central core 4a, the movable core 6 is moved toward the first outer core 2a due to both the induced electromagnetic force and the resilient force of the second coil spring 16. Therefore, both the movable core connecting shaft 7 and the valve shaft 10 are moved downward against the resilient force of the first coil spring 13, and the valve 11 is opened. Here, an open degree of the valve 11 is determined according to an intensity of the current supplied to the first coil 5a.

Thereafter, to close the valve 11, the supply of the current to the first coil 5a is cut off, and a current is supplied to the second coil 5b. In this case, an electromagnetic force is induced due to a magnetic field based on magnetic fluxes passing through a magnetic path of the movable core 6, the second outer core 2b and the second central core 4b, the movable core 6 is moved toward the second outer core 2b due to both the induced electromagnetic force and the resilient force of the first coil spring 13. Therefore, both the movable core connecting shaft 7 and the valve shaft 10 are moved upward against the resilient force of the second coil spring 16, and the valve 11 is closed.

As is described above, in the first embodiment, the top portion 2a-a of the first outer core 2a forming a portion of the fixed core is opposite to the movable core 6 and is inclined inward so as to shorten a diameter of the top portion 2a-a, the top portion 4a-a of the first central core 4a forming another portion of the fixed core is tapered off in compliance with the inclination of the portion 2a-a of the first outer core 2a, and the movable core 6 is set to have a width almost equal to the width W of the shortened diameter of the end face of the portion 2a-a of the first outer core 2a. Therefore, the movable coil 6 can be sized down and lightened in weight, and an open-close movement of the valve 11 can be smoothly performed.

Also, as shown in Fig. 2, the second central core 4b is formed in the case 1 in unsymmetrical to the first central core 4a with respect to the movable coil 6 on condition that a portion of the second central core 4b placed opposite to the movable coil 6 is larger than a portion of the first central core 4a placed opposite to the movable coil 6. Therefore, a force for holding the close state of the valve 11 can be heightened.

### EMBODIMENT 2

Fig. 4 is a longitudinal sectional view showing an important part of an electromagnetic valve driving device according to a second embodiment of the present invention. The diameter of the first central core 4a is constant along the longitudinal direction of the first central core 4a, and the coil 5a is additionally placed in a coil space surrounded by the inward inclined portion 2a-a of the first outer core 2a. A winding method of the coil 5a is as follows. The coil 5a not yet wound is insulated from the outside, and the coil 5a is directly wound on the first central core 4a. Because the coil space surrounded by the inward inclined portion 2a-a of the first outer core 2a is gradually narrowed, the coil 5a is directly wound on the first central core 4a while changing the number of turns of the coil 5a in the coil space so as to form the coil 5a in a stairs shape.

As is described above, in the second embodiment, the number of turns of the coil 5a and the number of turns of the coil 5b are increased, the length of the coil 5a and the length of the coil 5b are respectively increased in the longitudinal direction of the coil 5a or 5b. Therefore, the electromagnetic force induced can be increased, the movable element including the movable core 6 can be lightened in weight, and an open-close movement of the valve 11 can be smoothly performed.

Fig. 5 is a longitudinal sectional view showing a modified example of the important part of the electromagnetic valve driving device. The first central core 4 a having the tapered top portion 4a-a according to the first embodiment is covered with a winding frame 21 of which an outer surface has a constant diameter in the longitudinal direction of the first central core 4a, and the coil 5a is wounded on the winding frame 21 while changing the number of turns of the coil 5a in the coil space so as to form the coil 5a in a stairs shape. As compared with the electromagnetic valve driving device shown in Fig. 4, a distance from the top portion 2a-a of the first outer core 2a to the first central core 4a is lengthened due to the tapered top portion 4a-a of the first central core 4a. Therefore, a leakage flux leaking from both the first outer core 2a and the first central core 4a can be reduced, and the electromagnetic force can be efficiently induced.

### EMBODIMENT 3

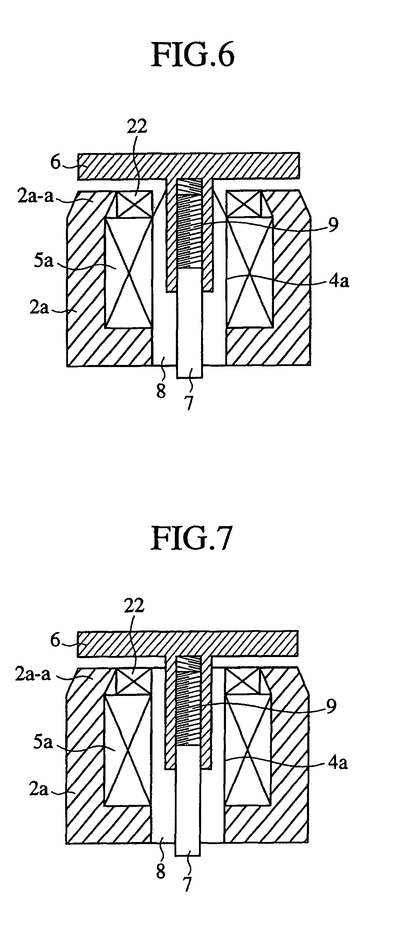

Fig. 6 is a longitudinal sectional view showing an important part of an electromagnetic valve driving device according to a third embodiment of the present invention, and Fig. 7 is a longitudinal sectional view showing a modified example of the important part of the electromagnetic valve driving device. Another coil 22 is wounded on the first central core 4a in the narrowed coil space between the top portion 2a-a of the first outer core 2a and the tapered top portion 4a-a of the first central core 4a.

As is described above, in the third embodiment, the winding of the coils 5a and 5b can be made easy, the electromagnetic force induced can be increased, the movable element including the movable core 6 can be lightened in weight, and an open-close movement of the valve 11 can be smoothly performed.

### EMBODIMENT 4

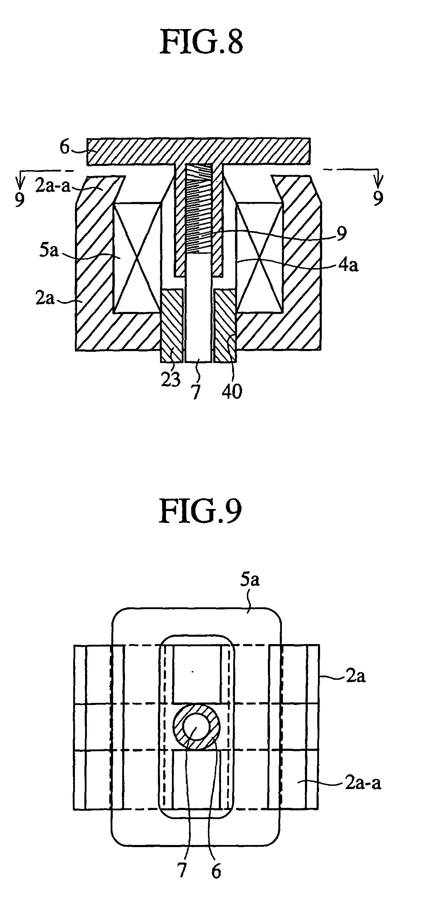

Fig. 8 is a longitudinal sectional view showing an important part of an electromagnetic valve driving device according to a fourth embodiment of the present invention, and Fig. 9 is a transverse sectional view taken substantially along line 9-9 of Fig. 8. A movable core connecting shaft penetrated hole 40 is placed in the base portion of the first central core 4a, and a bearing 23 of the movable core connecting shaft 7 is placed in the movable core connecting shaft penetrated hole 40 coaxially with the movable core connecting shaft penetrated hole 40.

As is described above, in the fourth embodiment, the bearing 23 is placed in the first central core 4a, the movable core connecting shaft 7 can be supported by the bearing 23 in the neighborhood of the movable core 6, a fluctuated movement of the movable core connecting shaft 7 can be efficiently prevented, the movable core connecting shaft 7 can be shortened, the movable element including the movable core 6 can be lightened in weight, and the stabilization of the driving of the electromagnetic valve driving device can be improved.

### EMBODIMENT 5

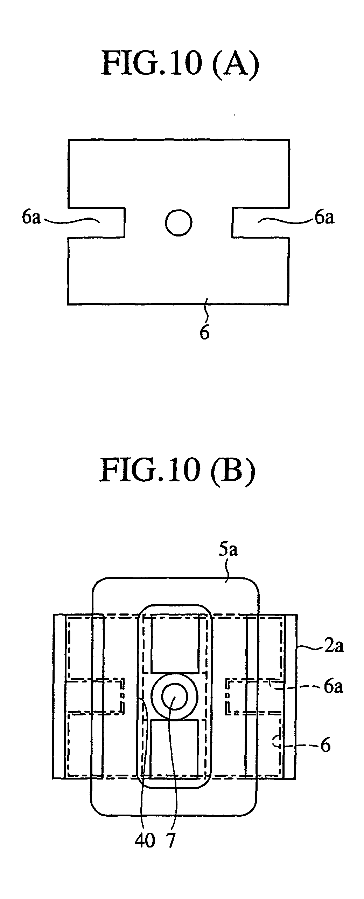

Fig. 10 shown a fifth embodiment of the present invention, Fig. 10(A) is a plan view of the movable core 6 used in the fifth embodiment, and Fig. 10(B) is a plan view showing an important part of an electromagnetic valve driving device to which the movable core 6 is applied. Both side end portions 6a and 6a of the movable core 6, which are placed in areas along both right and left lines passing through the movable core connecting shaft penetrated hole 40 placed in the first central core 4a and through which no magnetic flux substantially passes by the movable core connecting shaft penetrated hole 40, are cut off in the fifth embodiment.

As is described above, in the fifth embodiment, because a portion of the movable core 6 is cut off, the movable core 6 can be lightened in weight, the movable element including the movable core 6 can be lightened in weight, and the stabilization of the driving of the electromagnetic valve driving device can be improved. Here, only the side of the first outer core 2a is shown and described in the second to fourth embodiments. However, the configuration of the side of the second outer core 2b is the same as that of the side of the first outer core 2a, and the same function and effects as those of the side of the first outer core 2a can be obtained on the side of the second outer core 2b.

### EMBODIMENT 6

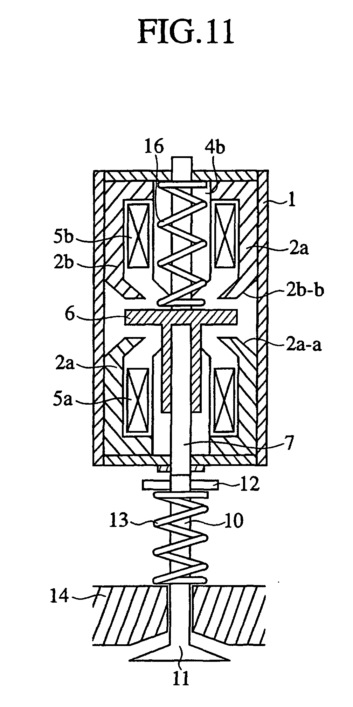

Fig. 11 is a longitudinal sectional view showing an electromagnetic valve driving device according to a sixth embodiment of the present invention. A second coil spring 16 is placed in the second central core 4b, and one end of the second coil spring 16 is held by the movable core 6.

As is described above, in the sixth embodiment, no spring receiving plate fitted to the movable core connecting shaft 7 is required. Therefore, the movable core connecting shaft 7 can be lightened in weight, the movable element including the movable core 6 can be lightened in weight, and the stabilization of the driving of the electromagnetic valve driving device can be improved.

### EMBODIMENT 7

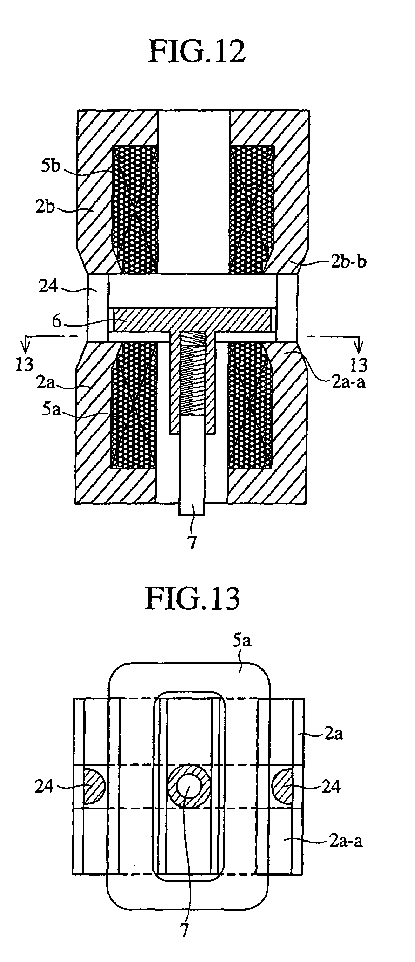

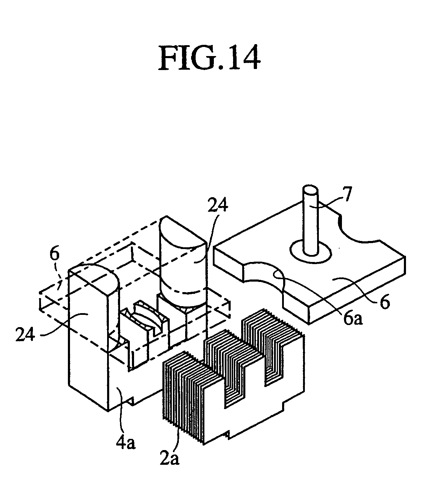

Fig. 12 is a longitudinal sectional view showing an electromagnetic valve driving device according to a seventh embodiment of the present invention, Fig. 13 is a lateral sectional view taken substantially along line 13-13 of Fig. 12, and Fig. 14 is an exploded oblique view of a part of the electromagnetic valve driving device shown in Fig. 13. A pair of interval managing jigs 24 are placed between the first outer core 2a and the second outer core 2b in correspondence to both right and left lines passing through the movable core connecting shaft penetrated hole 40 of the first central core 4a, and a pair of relief concavities 6a are placed in portions of the movable core 6 corresponding to the interval managing jigs 24. In this case, the interval managing jigs 24 and the first central core 4a are integrally formed of non-laminated non-magnetic material and are processed. Also, the first outer core 2a placed on the right and left sides of the first central core 4a is formed of laminated magnetic material and is processed.

As is described above, in the seventh embodiment, the interval between the first outer core 2a and the second outer core 2b, which are opposite to each other and form a part of the fixed core, can be managed by the simple structure of the interval managing jigs 24 with high precision without adversely influencing on the electromagnetic force induced.

### EMBODIMENT 8

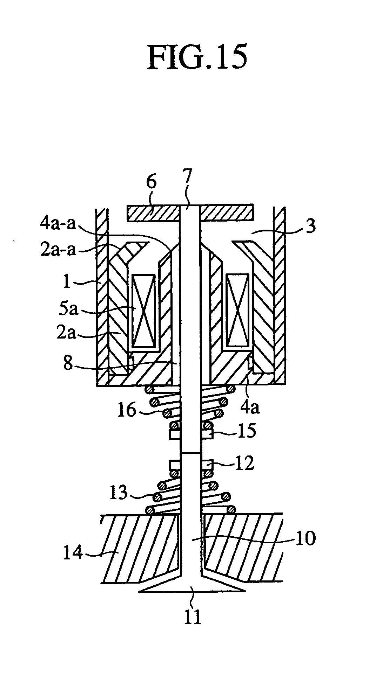

Fig. 15 is a longitudinal sectional view showing an important part of an electromagnetic valve driving device according to an eighth embodiment of the present invention. The first coil spring 13 has both a larger diameter on the side of the device body 14 and a smaller diameter on the side of the spring receiving plate 12 fitted to the valve shaft 10 so as to be formed in a conical shape. The second coil spring 16 has both a larger diameter on the side of the core and a smaller diameter on the side of the spring receiving plate 15 fitted to the movable core connecting shaft 7 so as to be formed in a conical shape.

As is described above, in the eighth embodiment, the diameter of the spring receiving plates 12 and 15, which are respectively fitted to the valve shaft 10 and the movable core connecting shaft 7 and respectively receive the smaller diameter ends of the coil springs 13 and 16, can be reduced, and both the valve shaft 10 and the movable core connecting shaft 7 can be lightened in weight. Therefore, the movable element including the movable core 6 can be lightened in weight, and the stabilization of the driving of the electromagnetic valve driving device can be improved.

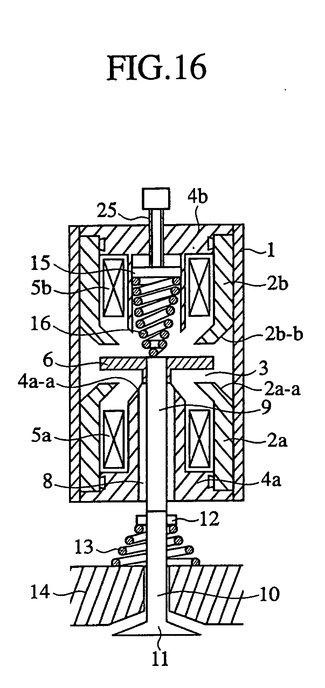

Also, the coil springs 13 and 16 respectively formed in the conical shape can be applied to an electromagnetic valve driving device shown in Fig. 16. In this case, the movable core 6 can also function as a spring receiving plate. Therefore, even though the movable core 6 receives the larger diameter end of the conical shaped coil spring 16, the same function and effects as those of the electromagnetic valve driving device shown in Fig. 15 can be obtained. Here, in Fig. 16, 25 indicates a spring force adjusting jig for changing a resilient force of the conical shaped coil spring 16.

### INDUSTRIAL APPLICABILITY

As is described above, the electromagnetic valve driving device according to the present invention is appropriate to the operation of the valve driving smoothly and stably performed while using a magnetic attraction force and the resilient force of the springs.

## Claims

1. An electromagnetic valve driving device, comprising:
a magnetic path forming core (2a, 2b, 4a, 4b, 6);
a movable core (6) denoting a portion of the magnetic path forming core;
a coil (5a, 5b) for producing a magnetic flux by receiving a supplied current;
a movable core connecting shaft (7) of which an end portion is fitted to the movable core and which is driven by receiving both an electromagnetic force and a spring resilient force; and
a valve shaft (10) which abuts with an end face of the movable core connecting shaft by receiving the spring resilient force,
**characterized in that** a top portion of a fixed core denoting the magnetic path forming core except the movable core is placed opposite to the movable core and is inclined inward so as to set the top portion to a smaller diameter, and the movable core is set to the same size as that of an end face of the top portion of the fixed core set to the smaller diameter.

2. The electromagnetic valve driving device according to claim 1, wherein the fixed core comprises:
an outer core (2a, 2b); and
a central core (4a, 4b) placed in a hollow area of the outer core, the top portion of the outer core placed opposite to the movable core is inclined inward, and a top portion of the central core is tapered in compliance with the inclination of the top portion of the outer core.

3. The electromagnetic valve driving device according to claim 2, wherein both an inward inclined portion (2a-a) of the outer core placed opposite to the movable core and a top tapered portion (4a-a) of the central core are formed so as to be protruded from an end face of the coil.

4. The electromagnetic valve driving device according to claim 2, wherein a diameter of the central core is constant along a longitudinal direction of the central core, and the coil is placed in an area opposite to an inward inclined portion (2a-a) of the outer core.

5. The electromagnetic valve driving device according to claim 2, wherein another coil (22) different from the coil placed in an area opposite to a straight line portion of the outer core is placed in an area opposite to an inward inclined portion of the outer core.

6. The electromagnetic valve driving device according to claim 2, further comprising a bearing (23) for holding the movable core connecting shaft in the central core in coaxial with a movable core connecting shaft penetrated hole (40) of the central core.

7. The electromagnetic valve driving device according to claim 2, further comprising a bearing (23) for holding the movable core connecting shaft in the central core in coaxial with a movable core connecting shaft penetrated hole (40) of the central core, wherein a pair of cut off portions (6a) are formed in both side end portions of the movable core which correspond to both right and left lines passing through the movable core connecting shaft penetrated hole and through which no magnetic flux passes by the movable core connecting shaft penetrated hole.

8. The electromagnetic valve driving device according to claim 2, wherein a movable core connecting shaft penetrated hole (40) is formed in a first central core (4a) of the central core, and a second central core (4b) of the central core opposite to the first central core is formed without any hole.

9. The electromagnetic valve driving device according to claim 2, further comprising a second coil spring (16) placed in a second central core of the central core, wherein one end of the second coil spring is held by the movable core.

10. The electromagnetic valve driving device according to claim 2, further comprising an interval managing jig (24) placed between a first outer core (2a) of the outer core and a second outer core (2b) of the outer core and placed in an area which corresponds to both right and left lines passing through a movable core connecting shaft penetrated hole (40) of a first central core (4a) of the central core and through which no magnetic flux passes by the movable core connecting shaft penetrated hole, wherein a relief concavity (6a) is placed in a portion of the movable core corresponding to the interval managing jig.

11. The electromagnetic valve driving device according to claim 2, wherein an interval managing jig (24) and the central core are integrally formed of non-laminated non-magnetic material and are processed.

12. The electromagnetic valve driving device according to claim 2, further comprising
a first coil spring (13) which has both a larger diameter on a side of a device body (14) and a smaller diameter on a side of a spring receiving plate (12) placed on the valve shaft so as to be formed in a conical shape; and
a second coil spring (16) which has both a larger diameter on a side of the magnetic path forming core and a smaller diameter on a side of a spring receiving plate (15) placed on the movable core connecting shaft so as to be formed in a conical shape.
